# EUROPEAN PATENT APPLICATION

(11) **EP 2 320 511 A1**
(43) Date of publication of application: **11.05.2011**
(21) Application number: 10190632.9
(22) Date of filing: 10.11.2010
(51) Int. Cl.: H01M 10/0525, H01M 4/485, H01M 4/1391

(54) **Electrode material, production method of same and lithium ion secondary battery**

(30) Priority: 10.11.2009 JP 2009257143
(71) Applicant: Fuji Jukogyo Kabushiki Kaisha, Tokyo 160-8316 (JP)
(72) Inventor: Mukainakano, Yuya, Tokyo 160-8316 (JP); Maruyama, Daisuke, Tokyo 160-8316 (JP); Baba, Ken, Tokyo 160-8316 (JP); Shiozaki, Ryuji, Tokyo 160-8316 (JP)
(74) Representative: Sajda, Wolf E.

(57) **Abstract**

An electrode material uses, as an active material, sodium vanadium oxide represented by NaₓV₂O₅ (0 < x < 0.33) and having a crystal phase of a stoichiometric composition of Na_{0.33}V₂O₅ or Na_{1.0}V₆O₁₅. As a result, together with improving battery capacity by employing a composition in which Na is made to be deficient, satisfactory cycle characteristics can be maintained due to the presence of sodium. In addition, since an electrode material production method uses NaOH and NH₄VO₃ as raw materials, the electrode material of the present invention can be efficiently produced with heat treatment at a comparatively low temperature.

## Description

### BACKGROUND OF THE INVENTION

### 1. Field of the Invention

The present invention relates to a technology for a lithium ion battery, and more particularly to a technology effective for an electrode material, a production method thereof, and a lithium ion secondary battery using the electrode material.

### 2. Description of the Related Art

Many efforts have been made to use a lithium ion secondary battery (LIB) having high energy density as an electric storage source of an electric vehicle (EV). In order to extend the driving range of EV, the energy density of LIB has to be further increased. In addition, safety is of course needed to apply the LIB to the EV, and in particular, it is important to enhance a structural stability of a positive electrode in a charged state.

With the foregoing in view, as an active material of an LIB positive electrode (electrode material), a vanadium oxide such as V₂O₅ has a high potential for high capacity since it has a large valence, and a thermally stable composition after charging the LIB. Consequently, the use of the vanadium oxide instead of a compound of lithium and cobalt acid, manganese acid or nickel acid has been considered.

For example, the present applicant has proposed in Japanese Patent Application Laid-open JP-A-2008-300 234 that smoothly moving of lithium ions to and from a crystal structure is ensured in the vanadium oxide by doping ions such as sodium ions or cesium ions having a larger ionic radius than lithium ions into gaps of the crystal structure to inhibit collapse of the crystal structure accompanying charging and discharging.

In addition, in Japanese Patent Application Laid-open JP-A-2008-300 233, smoothly moving of lithium ions to and from a crystal structure is proposed in the same manner as in Japanese Patent Application Laid-open JP-A-2008-300 234 by doping ions of groups V and VI of the periodic table that have a larger ionic radius than vanadium ions.

On the other hand, in S. Bach, J.P. Pereira-Ramos, N. Baffier, R. Messina, Journal of Electrochem. Soc., 137, (1990) 1042-1048, an examination is made of the electrochemical properties of a stoichiometric composition of a sodium vanadium oxide Na_{0.33}V₂O₅ for the purpose of using a sodium vanadium oxide pre-doped with sodium ions.

However, in the proposals made in the publications Japanese Patent Application Laid-open JP-A-2008-300 234 and Japanese Patent Application Laid-open JP-A-2008-300 233, attention is merely focused on doping with ions having a large ionic radius based on a presumed layered crystal structure, and there have been no studies regarding what specific components of crystal structures is to be used to demonstrate superior battery capacity and cycle characteristics.

On the other hand, regarding the Na_{0.33}V₂O₅ proposed in S. Bach, J.P. Pereira-Ramos, N. Baffier, R. Messina, Journal of Electrochem. Soc., 137, (1990) 1042-1048, capacity may be low and cycle characteristics may not be satisfactory when only the sodium vanadium oxide of this stoichiometric composition is used.

Consequently, the improvement of a sodium vanadium oxide having a crystal phase of the stoichiometric composition ofNa0.33V205 is required. In a method of improving the sodium vanadium oxide it is considered that the composition of the sodium vanadium oxide is changed while keeping the crystal phase. In addition, an examination from the viewpoint of a production method of a raw material and the like is desired to obtain such a sodium vanadium oxide efficiently.

### SUMMARY OF THE INVENTION

An object of the present invention is to provide an electrode material that enables the production of a lithium ion secondary battery having high capacity and excellent cycle characteristics that contains a sodium vanadium oxide having a phase of a stoichiometric composition of Na0.33V205, a production method that enables the efficient production thereof, and a lithium ion secondary battery using the electrode material.

The above and other objects as well as novel characteristics of the present invention will be made clear from the description of the present specification and the accompanying drawings.

The following provides a brief explanation of a summary of typical aspects disclosed in the present application.

An electrode material according to a typical embodiment contains a sodium vanadium oxide represented by NaₓV₂O₅ (0 < x < 0.33) and having a crystal phase of a stoichiometric composition of Na_{0.33}V₂O₅ and/or Na_{1.0}V₆O₁₅.

In addition, a production method of an electrode material according to a typical embodiment is to produce the above-mentioned electrode material using sodium hydroxide (NaOH) and ammonium metavanadate (NH₄VO₃) as raw materials.

In addition, a lithium ion secondary battery according to a typical embodiment has a positive electrode that uses the above-mentioned electrode material.

The following provides a brief explanation of effects obtained by the typical aspects disclosed in the present application.

Namely, the electrode material of the present invention contains a sodium vanadium oxide represented by NaₓV₂O₅ (0 < x < 0.33) and having a crystal phase of a stoichiometric composition of Na_{0.33}V₂O₅ and/or Na_{1.0}V₆O₁₅.

In other words, battery capacity can be improved in comparison with a sodium vanadium oxide having only the stoichiometric composition of Na_{0.33}V₂O₅, by employing a composition in which Na is made to be deficient, and excellent cycle characteristics can be maintained due to the presence of sodium. As a result, a lithium ion secondary battery can be produced that has both high capacity and excellent cycle characteristics.

In addition, since the electrode material production method of the present invention uses sodium hydroxide (NaOH) and ammonium metavanadate (NH₄VO₃) as raw materials, the electrode material of the present invention can be produced efficiently.

### BRIEF DESCRIPTION OF THE DRAWINGS

- Fig. 1: is an explanatory drawing schematically showing the crystal structure of a sodium vanadium oxide;
- Fig. 2(a): is an explanatory drawing schematically showing the crystal structure of Na_{0.33}V₂O₅ (Na_{1.0}V₆O₁₅), and
- Fig. 2(b): is an explanatory drawing schematically showing the crystal structure of NaₓV₂O₅ (0 < x < 0.33);
- Fig. 3: is a flow chart showing a production process of the electrode material of the present invention;
- Fig. 4: is a cross-sectional view showing the general composition of an example of the lithium ion secondary battery of the present invention;
- Fig. 5: is a cross-sectional view showing the general composition of another example of the lithium ion secondary battery of the present invention;
- Fig. 6: is a graph showing the results of X-ray diffraction measurement of a positive electrode material powder of the present invention;
- Fig. 7: is a graph showing the results of initial discharge capacity measurement; and,
- Fig. 8: is a graph showing the results of capacity retention rate measurement.

### DESCRIPTION OF THE PREFERRED EMBODIMENTS

The following provides a detailed explanation of embodiments of the present invention. The electrode material of the present invention contains a sodium vanadium oxide (sodium vanadium complex oxide) as an active material thereof. As a result, collapse of the crystal structure is inhibited or avoided, and smoothly moving of lithium ions to and from gaps in the crystal structure, namely doping and dedoping, is ensured by sodium ions preliminarily retained by the active material.

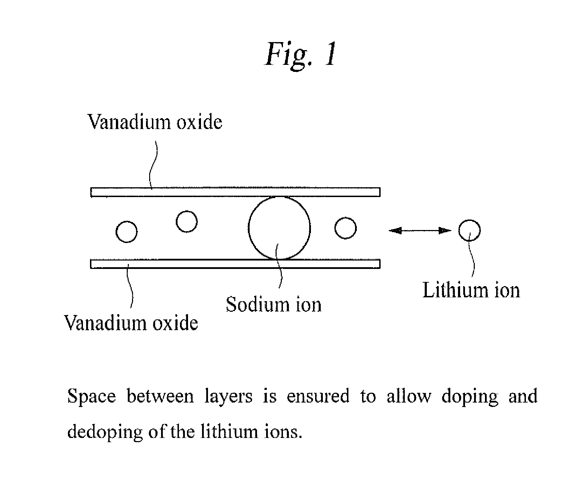

More specifically, as shown in Fig. 1, in the case of assuming the crystal structure of a vanadium oxide to have a flat, layered form, smoothly moving of lithium ions between layers is ensured due to the presence of sodium ions having a larger ionic radius than lithium ions interposed between the layers of the vanadium oxide.

In the specification of the present invention, the term doping refers to a phenomenon where lithium ions enter an active material in a positive electrode and the like by storage, support, adsorption, insertion or the like, while the term dedoping refers to a phenomenon where lithium ions leave the active material by release, desorption or the like.

The sodium vanadium oxide represented by NaₓV₂O₅ (0 < x < 0.33) and having a crystal phase of Na_{0.33}V₂O₅ or Na_{1.0}V₆O₁₅ in the stoichiometric composition thereof is used as an active material. The composition of the sodium vanadium oxide is more deficient in sodium than the stoichiometric composition of sodium vanadium oxides Na_{0.33}V₂O₅ and Na_{1.0}V₆O_{15*.*}

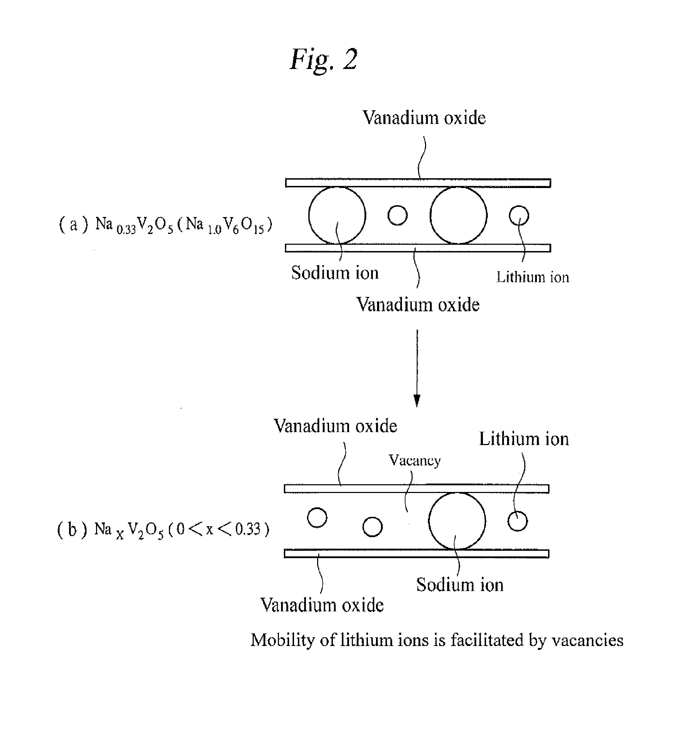

As shown in Fig. 2, in the case of assuming flat, the layered crystal in the same manner as Fig. 1, vacancies are formed at locations deficient in sodium in NaₓV₂O₅ (0 < x < 0.33) (see Fig. 2(b)) compared to the sodium vanadium oxide having a stoichiometric composition (see Fig. 2(a)). As a result, since lithium ions are also able to move into the vacancies, their degree of mobility increases and the capacity of a resulting battery can be improved.

In addition, even if sodium is partially deficient, since sodium ions are present and the crystal structure has the crystal phase of the sodium vanadium oxide having a stoichiometric composition, the crystal structure is maintained without undergoing significant collapse, thereby enabling it to have excellent cycle characteristics.

The value of x described above is preferably as close to zero as possible from the viewpoint of battery capacity since such a value allows the formation of numerous vacancies and improvement of capacity. However, in consideration of improvement of cycle characteristics, it is preferably within the range of 0.06 ≤ x ≤ 0.3 and more preferably within the range of 0.06 ≤ x ≤ 0.2.

The Na_{0.33}V₂O₅ or Na_{1.0}V₆O₁₅ of the crystal phase can be confirmed by X-ray diffraction pattern having the most intense diffraction line at the peak of the (002) crystal plane between 20 = 10° to 15° in the X-ray diffraction pattern.

During charging, Na_{0.33}V₂O₅ is thought to have a structure in which layers of vanadium oxide (VO layer) are formed in the form of patterned indented surfaces havin comparably undulating with sodium interposed therebetween. Na_{1.0}V₆O₁₅ is thought to have a so-called one-dimensional tunnel structure in which the VO layers are formed in the form of patterned indented surfaces having different undulations in a constant period, and together with sodium being interposed therebetween, each of the VO layers is bonded by interlayer oxygen atoms.

In other words, even though the composite ratio and crystal system of Na_{0.33}V₂O₅ and Na_{1.0}V₆O₁₅ are same, the disposition of their elements differs, thereby enabling Na_{0.33}V₂O₅and Na_{1.0}V₆O₁₅ to be strictly distinguished as crystal phases. However, since the electrochemical reactions of both are equivalent, the sodium vanadium oxide can contain one or both of Na_{0.33}V₂O₅ and Na_{1.0}V₆O_{15.} The one-dimensional tunnel structure is described in, for example, the electronic edition of of Nature Materials on August 11, 2008.

Here, it is required that a crystal structure is present in the sodium vanadium oxide of the present invention that has a phase of Na_{0.33}V₂O₅ or Naa_{1.0}V₆O₁₅More specifically, it is required that the active material used is the sodium vanadium oxide NaₓV₂O₅ (0 < x < 0.33) that has a crystal phase of Na_{0.33}V₂O₅ or Na_{1.0}V₆O₁₅ in the case that the amount of Na is 0.33 or 1.0. In other words, the crystal structure of the sodium vanadium oxide can be varied by charging and discharging.

Although there are no particular limitations on a raw material of the sodium vanadium oxide NaₓV₂O₅ (0 < x < 0.33) provided it enables the synthesis thereof, from the viewpoint of efficiently obtaining this oxide, sodium hydroxide (NaOH) and ammonium metavanadate (NH₄VO₃) are preferably used.

When NH₄VO₃ is used, the targeted vanadium oxide can be obtained with high purity and low cost. In addition, since NaOH has a low melting point and demonstrates favorable compatibility with solids, a reaction can be performed at a comparatively low temperature.

A blending ratio of NaOH and NH₄VO₃ is such that amounts calculated from the compositions of both are respectively blended so that the value of x of NaₓV₂O₅ becomes a desired value. Specifically, in the case obtaining NaₓV₂O₅ for which the value of x is 0.1, NaOH and NH₄VO₃ are blended so that the molar ratio of NaOH/NH₄VO₃ is 0.05. In addition, in the case of obtaining NaxV₂O₅ for which the value of x is 0.2, NaOH and NH₄VO₃ are blended so that the molar ratio of NaOH/NH₄VO₃ is 0.1.

Although NaOH and NH₄VO₃ may be reacted by either a solid phase reaction (solid phase method) or a liquid phase reaction (liquid phase method), they are preferably reacted by a solid phase reaction since the reaction can be performed without the intervention of solvent. Specifically, a raw material powder prepared by crushing or the like is preferably heat-treated at a high temperature to synthesize the sodium vanadium oxide.

Furthermore, although a so-called sol gel method, in which a desired compound is synthesized by removing a liquid such as water or organic solvent from a solution, is sometimes included in the solid phase reaction in the broad sense, in the present invention, the solid phase reaction does not include the sol gel method, but rather only refers to typical methods for performing synthesis between solids.

The heat treatment temperature during the solid phase reaction is normally higher than 200 °C and equal to or lower than 700 °C, and from the viewpoint of performing the reaction rapidly, it is preferably between 250 °C and 700 °C and, more preferably between 300 °C and 700 °C. If the heat treatment temperature is 200 °C or lower, it becomes difficult to synthesize the sodium vanadium oxide, and if the temperature exceeds 700 °C, the vanadium oxide ends up melting. Furthermore, the heat treatment time is normally 4 to 24 hours.

In addition, from the viewpoint of safety and reducing formation of impurities attributable to reaction with air, the heat treatment is normally performed in an inert atmosphere containing nitrogen or argon gas.

While the heat treatment temperature when performing ordinarily known solid phase reactions is 600 °C or higher, in the present invention, the heat treatment temperature can be lowered and production efficiency can be improved by using NaOH and NH₄VO₃ as raw materials.

In other words, during the course of formation of a vanadium compound by thermal decomposition of NH₄VO₃, the reaction proceeds such that low-melting NaOH melts and the molten NaOH covers the vanadium compound, and this is thought to make it possible to lower the heat treatment temperature.

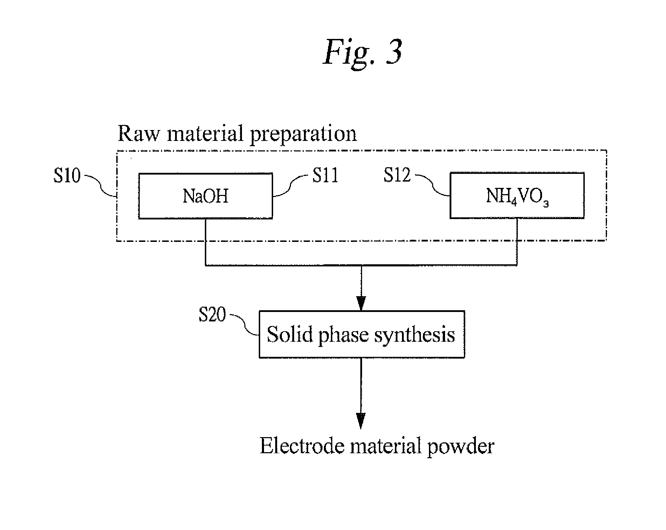

An overview of the flow of a preferable production method of the sodium vanadium oxide is shown in Fig. 3. Specifically, a powder of NaOH (S11) and a powder of NH₄VO₃ (S12) are first respectively prepared in a raw material preparation step S10. An electrode material powder of a sodium vanadium oxide is then obtained by a solid phase reaction in a synthesis step S20.

As has been previously explained, since the electrode material of the present invention contains a sodium vanadium oxide, smoothly moving of lithium ions is ensured in advance by sodium ions, thereby making it possible to obtain excellent cycle characteristics. The use of a sodium vanadium oxide having less sodium than the stoichiometric composition makes it possible to improve battery capacity.

In addition, the use of an overall composition of NaₓV₂O₅ (0.06 ≤ x ≤ 0.3) while maintaining a stoichiometric composition for the crystal phase makes it possible to stabilize the crystal structure, thereby further improving cycle characteristics.

Moreover, the use of NaOH and NH₄VO₃ as raw materials allows the obtaining of a sodium vanadium oxide with high purity and low costs, while also allowing heat treatment at a comparatively low temperature of 500 °C or lower in the solid phase reaction.

The electrode material of the present invention can be preferably used as an active material of a positive electrode material of a lithium ion secondary battery.

Next, an explanation is provided of the lithium ion secondary battery of the present invention. The lithium ion secondary battery of the present invention is provided with a positive electrode produced from the above-mentioned electrode material of the present invention, a negative electrode, and an electrolyte dissolved in a solvent, and is further provided with a lithium electrode as necessary.

The positive electrode can be produced by mixing the electrode material of the present invention with a binder such as polyvinylidene fluoride (PVDF), and preferably electrically conductive particles, forming a slurry-like coating layer of the positive electrode material by using a solvent such as N-methylpyrrolidone (NMP), and then coating this onto a current collector. The coated amount is preferably such that the coating layer is formed to a thickness of, for example, 10 µm to 100 µm.

Examples of the electrically conductive particles include conductive carbon such as Ketjen black, metals such as copper, iron, silver, nickel, palladium, gold, platinum, indium and tungsten, and conductive metal oxides such as indium oxide and tin oxide. These electrically conductive particles are preferably added at a rate of 1 to 30 % of the weight of the active material of the electrode material.

A conductive base in which a surface that contacts the coating layer exhibits electrical conductivity is used for the current collector. This conductive base can be formed with a conductive material such as metal, conductive metal oxide and conductive carbon.

Examples of preferable conductive materials include copper, gold, aluminum, alloys thereof and conductive carbon. In addition, the current collector may also employ a configuration in which a base body formed with a non-conductive material is coated with a conductive material.

The negative electrode can be obtained in the same manner as the electrode material of the present invention, by mixing an active material of an typically used lithium-based material with a binder to form a slurry, and then coating the slurry onto a current collector.

Examples of this lithium-based material include lithium-based metal materials, intermetallic compound materials of a metal and lithium metal, and lithium-intercalation carbon materials. Examples of lithium-based metal materials include metal lithium and lithium alloys (such as Li-Al alloy).

Examples of an intermetallic compound material of a metal and lithium metal include tin and silicon. An example of a lithium compound is lithium nitride.

Examples of lithium-intercalated carbon materials that can be used include graphite, carbon-based materials and polyacene-based substances. Examples of carbon-based materials include non-graphitizable carbon materials. An example of a polyacene-based substance is PAS, which is an insoluble and non-solubilizable base that has a polyacene-based structure. All of these lithium-intercalation carbon materials allow reversible doping of lithium ions.

In the case of using a carbon material and the like that allows doping and dedoping of lithium ions, a lithium electrode is separately provided to pre-dope lithium ions from the lithium electrode to the negative electrode during initial charging. The lithium electrode is formed by affixing the above-mentioned current collector to a lithium ion supply source. Metal lithium, lithium-aluminum alloy and the like can be used for the lithium ion supply source.

Namely, any substance can be used provided it at least contains elementary lithium and is able to supply lithium ions. Lithium ions are preferably doped by a molar ratio of 0.1 to 6 with respect to the electrode material. If the molar ratio of the amount of doped lithium ions is less than 0.1, doping effects are not adequately exhibited.

On the other hand, if the molar ratio of the amount of doped lithium ions exceeds 6, the electrode material might be reduced to metal. Lithium-based materials exemplified as negative electrode materials other than lithium intercalation carbon materials can be used for the lithium electrode.

Examples of electrolytes that can be used include lithium salts such as CF₃SO₃Li, C₄F₉SO₈Li, (CF₃SO₂)₂NLi, (CF₃SO₂)₃CLi, LiBF₄, LiPF₆ and LiClO₄.

The solvent that dissolves this electrolyte is a non-aqueous solvent. Examples of the non-aqueous solvent include linear carbonates, cyclic carbonates, cyclic esters, nitrile compounds, acid anhydrides, amide compounds, phosphate compounds and amine compounds. Furthermore, the electrolyte solution may be a solution of a non-aqueous solvent, or may be a polymer gel containing this electrolyte solution (polymer gel electrolyte).

Specific examples of the non-aqueous solvent include ethylene carbonate (EC), diethyl carbonate (DEC), propylene carbonate, dimethoxyethane, γ-butyrolactone, n-methylpyrrolidinone, N,N'-dimethylacetoamide and acetonitrile. In addition, other examples include a mixture of propylene carbonate and dimethoxyethane and a mixture of sulfolane and tetrahydrofuran.

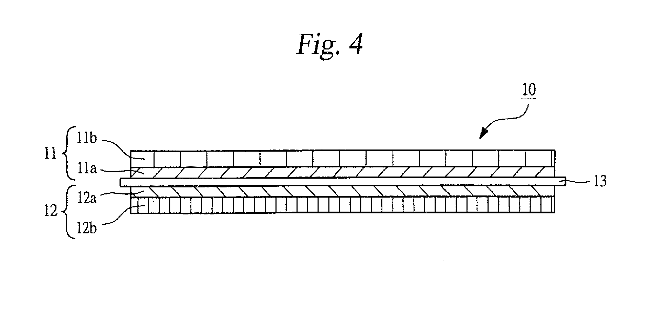

Fig. 4 is a cross-sectional view showing the general composition of an example of the lithium ion secondary battery of the present invention. A lithium ion secondary battery 10 shown in Fig. 4 has a positive electrode 11 and a negative electrode 12 arranged in mutual opposition with an electrolyte layer 13 interposed therebetween.

The positive electrode 11 is composed of a positive electrode active material layer 11a containing the electrode material according to the present invention, and a positive electrode current collector 11b. The positive electrode active material layer 11a is applied as a coating layer onto a surface of the positive electrode current collector 11b, the surface is facing the electrolyte layer 13.

The negative electrode 12 is composed of a negative electrode active material layer 12a and a negative electrode current collector 12b in the same manner as the positive electrode 11, and the negative electrode active material layer 12a is applied as a coating layer onto a surface of the negative electrode current collector 12b, the surface is facing the electrolyte layer 13.

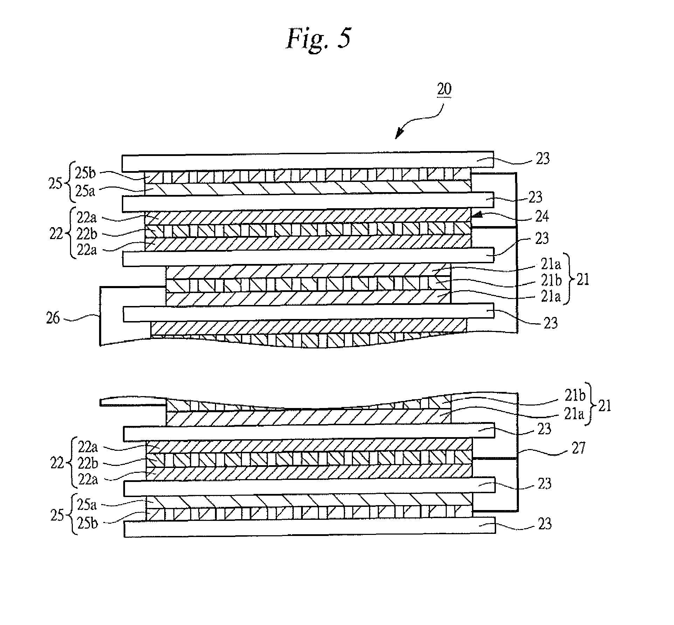

Fig. 5 is a cross-sectional view showing the general composition of another example of the lithium ion secondary battery of the present invention. A lithium ion secondary battery 20 shown in Fig. 5 is provided with an electrode unit 24 in which a plurality of layers of a positive electrode 21 and a negative electrode 22 are alternately laminated while interposing separators 23 therebetween,

The electrode unit 24 has the negative electrodes 22 arranged on the outermost layers. Namely, the electrode unit 24 has a plurality of the positive electrodes 21 and the negative electrodes 22 laminated while interposing the separators 23 on both sides of the outermost negative electrodes 22.

A lithium electrode 25 is further arranged on the outside of the negative electrodes 22 arranged on the outermost layers in opposition thereto with the separators 23 interposed therebetween. The lithium electrode 25 has, for example, metal lithium 25a provided on a lithium electrode current collector 25b. The lithium electrode current collector 25b is a so-called porous body in which a large number of pores (through holes) are formed. Lithium ions that have dissolved out of the lithium electrode 25 are pre-doped into the negative electrode 22.

In the positive electrode 21, a positive electrode active material layer 21a is provided on both sides of a positive electrode current collector 21b. The positive electrode current collector 21b is also a porous body in the same manner as the lithium electrode current collector 25b. Similarly, in the negative electrode 22, a negative electrode active material layer 22a is provided on both sides of a negative electrode current collector 22b, and the negative electrode current collector 22b is also a porous body.

In addition, the separator 23 is composed of, for example, a polyolefin porous body having through holes and being resistant to the electrolyte solution, the positive electrode active material, the negative electrode active material and the like.

Furthermore, the plurality of positive electrode current collectors 21b are mutually connected through a lead 26. Similarly, the plurality of negative electrode current collectors 22b and lithium electrode current collectors 25b are mutually connected through a lead 27.

The lithium ion secondary battery 20 is composed by packaging the electrode unit 24 thus configured in a laminate film not shown, and immersing an electrolyte solution into the laminate film.

In addition, the lithium ion secondary battery may also be composed in a manner other than that indicated in Figs. 4 and 5, and for example, a type of battery may be employed in which metal lithium is provided as a negative electrode, and the negative electrode is interchanged after having doped lithium ions into a positive electrode.

Since the lithium ion secondary battery of the present invention uses the electrode material of the present invention as a positive electrode material, it is able to demonstrate high capacity and excellent cycle characteristics.

### Examples

The following provides an additional explanation of the present invention through examples thereof. It should be noted that the present invention is not limited to these examples.

### Example 1

### Production of Positive Electrode

A powder consisting of sodium hydroxide (NaOH) and ammonium metavanadate (NH4VO₃) was prepared as raw material and allowed to react in the solid phase after blending at a molar ratio of NaOH/NH₄VO₃ of 0.05 to synthesize Na_{0.10}V₂O₅ as a positive electrode material of the present invention. The solid phase reaction was performed by using 5 g of the raw material powder, heating up to 300 °C under conditions of heating at the rate of 10 K/min in a nitrogen atmosphere, and heat-treating for 5 hours at 300 °C once that temperature was reached.

This positive electrode material powder in an amount of 90 % by weight was mixed with 5 % by weight of a binder containing polyvinylidene fluoride (PVDF) and 5 % by weight of electrically conductive carbon black followed by forming into a slurry using N-methylpyrrolidone (NMP) as solvent.

Subsequently, the slurry was applied onto a porous Al foil using the doctor blade method. The slurry was uniformly applied at a mixture density of 2 g/cm³ per side followed by molding and cutting into the shape of rectangles measuring 24 cm × 36 cm to obtain positive electrodes.

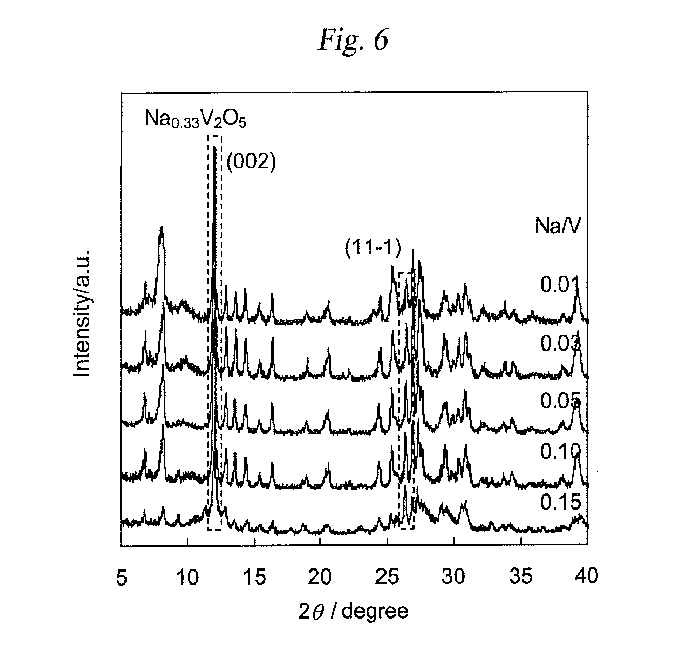

Here, the crystal structure of the positive electrode material powder was analyzed by an X-ray diffractometer, and the most intense diffraction line was observed at the peak of the (002) crystal plane between 2 θ = 10° to 15°, while the second most intense diffraction line was observed at the peak of the (11 - 1) crystal plane between 2 θ = 25° to 30° as shown in Fig. 6. On the basis of these results, the positive electrode material powder was confirmed to have an Na_{0.33}V₂O₅ or Na_{1.0}V₆O₁₅crystal phase.

In addition, the Na and V contents of the positive electrode material powder were determined with an inductively coupled plasma (ICP) atomic emission spectrometer and the elementary ratio of Na/V was calculated therefrom. As a result, Na/V was confirmed to be 0.05. On the basis of the above-mentioned X-ray diffraction and ICP analysis results, a sodium vanadium compound (sodium vanadium oxide) was confirmed to be formed that has a structure represented by NaₓV₂O₅ in which x = 0.10.

### Production of Negative Electrode

Graphite and PVDF as binder were mixed at a weight ratio of 94:6 to prepare a slurry diluted with NMP. This slurry was then uniformly applied onto one or both sides of a copper current collector having through holes to a mixture density of 1.5 mg/cm³ per side followed by molding and cutting into the shape of rectangles measuring 26 mm × 38 mm to obtain negative electrodes.

### Production of Battery

Twelve of the positive electrodes and 13 of the negative electrodes (of which 2 were coated only on one side) prepared above were laminated with polyolefin-based microporous films interposed as separators therebetween. Furthermore, the 2 negative electrodes that were only coated on one side were arranged on the outermost layers.

Lithium electrodes, in which metal lithium was applied on stainless steel porous foils with separators interposed therebetween, were further arranged on the outermost layers to produce an electrode laminated unit composed of positive electrodes, negative electrodes, lithium electrodes and separators.

This electrode laminated unit was packaged in an aluminum laminate film followed by injection of an electrolyte solution consisting of ethylene carbonate (EC) and diethyl carbonate (DEC) at a weight ratio of 1/3 dissolved with lithium tetrafluoroborate (LiBF₄) at 1 mol/l. A lithium ion secondary battery was assembled as a result thereof.

### Measurement of Initial Discharge Capacity and Capacity Retention Rate

One cell of the lithium ion secondary battery produced above was disassembled after being left for 20 days. Since the metal lithium had completely disappeared, a required amount of lithium ions was confirmed to have been preliminarily supported and stored, i.e., pre-doped, into the negative electrode.

In addition, one of the remaining cells of the battery was used for measuring an initial discharge capacity per active material at 0.1 C discharging rate as an indicator of battery capacity (mAh/g active material), and a discharge capacity ratio (capacity retention rate (%)) as an indicator of cycle characteristics.

The capacity retention ratio was obtained in such a manner that, after the charging rate was accelerated to 0.2 C, and 20 charging and discharging cycles were repeated and the ratio of the discharging rate after the 20 cycles to the initial 0.2 C discharging capacity was measured.

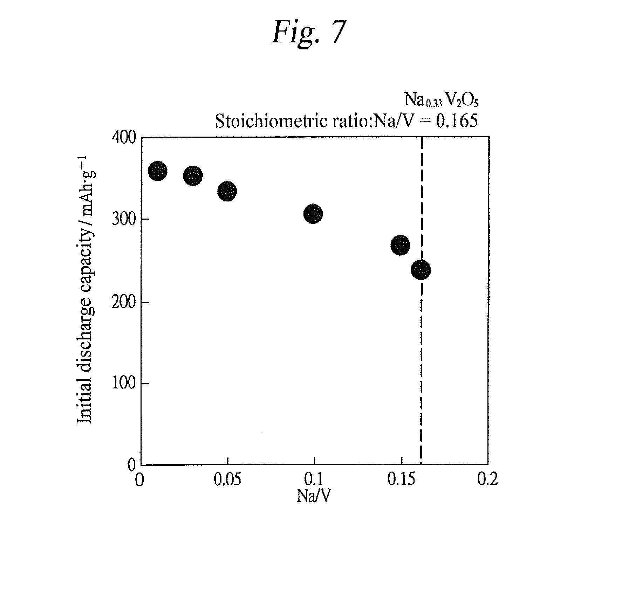

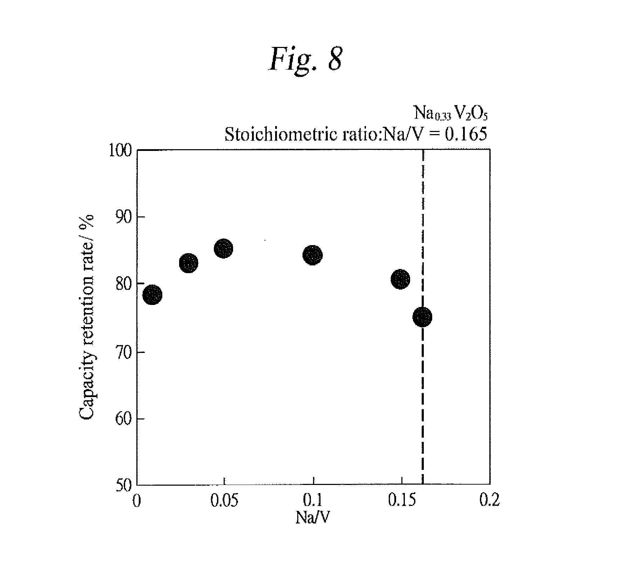

As a result, the initial discharge capacity was 335 mAh/g per active material and the capacity retention rate was 85 %. The initial discharge capacity is shown in the graph of Fig. 7, while the capacity retention rate is shown in the graph of Fig. 8, Results for other examples to be subsequently described are shown in the same manner.

### Example 2

A positive electrode material powder and lithium ion secondary battery were obtained in the same manner as Example 1 with an exception of performing the solid phase reaction after blending the NaOH and NH₄VO₃ at a molar ratio of 0.10 to synthesize Na_{0.20}V₂O₅ for use as the positive electrode material of the present invention.

The positive electrode material powder was analyzed with an X-ray diffractometer, and the powder was confirmed to have a crystal phase of Na_{0.33}V₂O₅ or Na_{0.1}V₆O₁₅ in the same manner as Example 1 as shown in Fig. 6.

In addition, the elementary ratio of Na/V was calculated in the same manner as Example 1 with an ICP atomic emission spectrometer, and the ratio of Na/V was confirmed to be 0.10. On the basis of the above, a sodium vanadium compound was confirmed to have been formed that has a structure represented by NaₓV₂O₅ in which x = 0.20.

The initial discharge capacity and capacity retention rate for the resulting lithium ion secondary battery were measured in the same manner as Example 1, and the initial discharge capacity was 307 mAh/g per active material and the capacity retention rate was 84 %.

### Example 3

A positive electrode material powder and lithium ion secondary battery were obtained in the same manner as Example 1 with an exception of performing the solid phase reaction after blending the NaOH and NH₄VO₃ at a molar ratio of 0.15 to synthesize Na_{0.30}V₂O₅ for use as the positive electrode material of the present invention.

The positive electrode material powder was analyzed with an X-ray diffractometer, and the powder was confirmed to have a crystal phase of Na₀.₃₃V₂O₅ or Na_{1.0}V₆O₁₅ in the same manner as Example 1 as shown in Fig. 6.

In addition, the elementary ratio of Na/V was calculated in the same manner as Example 1 with an ICP atomic emission spectrometer, and the ratio of Na/V was confirmed to be 0.15. On the basis of the above, a sodium vanadium compound was confirmed to have been formed that has a structure represented by NaₓV₂O₅ in which x = 0.30.

The initial discharge capacity and capacity retention rate for the resulting lithium ion secondary battery were measured in the same manner as Example 1, and the initial discharge capacity was 268 mAh/g per active material and the capacity retention rate was 81 %.

### Example 4

A positive electrode material powder and lithium ion secondary battery were obtained in the same manner as Example 1 with an exception of performing the solid phase reaction after blending the NaOH and NH₄VO₃ at a molar ratio of 0.01 to synthesize Na_{0.02}V₂O₅ for use as the positive electrode material of the present invention.

The positive electrode material powder was analyzed with an X-ray diffractometer, and the powder was confirmed to have a crystal phase of Na_{0.33}V₂O₅ or Na_{1.0}V₆O₁₅ in the same manner as Example 1 as shown in Fig. 6.

In addition, the elementary ratio of Na/V was calculated in the same manner as Example 1 with an ICP atomic emission spectrometer, and the ratio of Na/V was confirmed to be 0.01. On the basis of the above, a sodium vanadium compound was confirmed to have been formed that has a structure represented by NaₓV₂O₅ in which x = 0.02.

The initial discharge capacity and capacity retention rate for the resulting lithium ion secondary battery were measured in the same manner as Example 1, the initial discharge capacity was 360 mAh/g per active material and the capacity retention rate was 78 %.

### Example 5

A positive electrode material powder and lithium ion secondary battery were obtained in the same manner as Example 1 with an exception of performing the solid phase reaction after blending the NaOH and NH₄VO₃ at a molar ratio of 0.03 to synthesize Na_{0.06}V₂O₅ for use as the positive electrode material of the present invention.

The positive electrode material powder was analyzed with an X-ray diffractometer, and the powder was confirmed to have a crystal phase of Na_{0.33}V₂O₅ or Na_{1.0}V₆O₁₅ in the same manner as Example 1 as shown in Fig. 6.

In addition, the elementary ratio of Na/V was calculated in the same manner as Example 1 with an ICP atomic emission spectrometer, and the ratio of Na/V was confirmed to be 0.03. On the basis of the above, a sodium vanadium compound was confirmed to have been formed that has a structure represented by NaₓV₂O₅ in which x = 0.06.

The initial discharge capacity and capacity retention rate for the resulting lithium ion secondary battery were measured in the same manner as Example 1, and the initial discharge capacity was 356 mAh/g per active material and the capacity retention rate was 83 %.

### Comparative Example

A positive electrode material powder and lithium ion secondary battery were obtained in the same manner as Example 1 with the exception of performing the solid phase reaction after blending the NaOH and NH₄VO₃ at a molar ratio of 0.165 to synthesize Na_{0.33}V₂O₅ for use as the positive electrode material in the structure,

The positive electrode material powder was analyzed with an X-ray diffractometer, and the powder was confirmed to have a crystal phase of Na_{0.33}V₂O₅ or Na_{1.0}V₆O₁₅. In addition, the elementary ratio of Na/V was calculated in the same manner as Example 1 with an ICP atomic emission spectrometer, and the ratio of Na/V was confirmed to be 0.165. On the basis of the above, a sodium vanadium compound was confirmed to have been formed that has a structure represented by NaₓV₂O₅ in which x = 0.33.

The initial discharge capacity and capacity retention rate for the resulting lithium ion secondary battery were measured in the same manner as Examples 1 to 5, and the initial discharge capacity was 230 mAh/g per active material and the capacity retention rate was 75 %.

Based on results of Fig. 7, the initial discharge capacity of the resulting lithium ion secondary batteries was improved as the amount of sodium was reduced compared to the stoichiometric composition of Na_{0.33}V₂O₅ or Na_{1.0}V₆O₁₅ In particular, the initial discharge capacity was improved to 360 mAh/g per active material in Example 4 in which the ratio ofNa/V was 0.01.

Consequently, as a result of reducing the amount of sodium added from that of the stoichiometric ratio, vacancies are formed in the crystal structure and this is thought to result in an increased mobility of lithium ions.

In addition, based on the results of Fig. 8, the lithium ion secondary batteries of Examples 1 to 5 each had a capacity retention rate of approximately 80 % or more, and more excellent cycle characteristics than those of the lithium ion secondary battery of Comparative Example. In Examples 1, 2 and 5 in particular, in which the ratio of Na/V was 0.03 to 0.10, a capacity retention rate of nearly 85 % was demonstrated and cycle characteristics were improved.

The present invention can be particularly effectively used in the field of positive electrode materials of lithium ion secondary batteries,

## Claims

1. An electrode material, comprising:
sodium vanadium oxide represented by NaₓV₂O₅ (0 < x < 0.33) and having a crystal phase of a stoichiometric composition of Na_{0.33}V₂O₅ and/or Na_{1.0}V₆O₁₅.

2. The electrode material according to claim 1,
wherein the value of x of the sodium vanadium oxide NaₓV₂O₅ is 0.06 ≤ x ≤ 0.3.

3. A production method for producing the electrode material
according to claim 1 or claim 2,
wherein sodium hydroxide (NaOH) and ammonium metavanadate (NH₄VO₃) are used as raw materials.

4. The production method according to claim 3,
wherein sodium vanadium oxide is synthesized by a solid phase reaction between the sodium hydroxide (NaOH) and the ammonium metavanadate (NH₄VO₃).

5. The production method according to claim 4,
wherein in the solid phase reaction, heat treatment is performed at a temperature of higher than 200 °C and equal to or lower than 700 °C.

6. Use of the electrode material according to claim 1 or 2
in secondary battery, in particular a lithium ion secondary battery.
